# EUROPEAN PATENT APPLICATION

(11) **EP 4 492 489 A1**
(43) Date of publication of application: **15.01.2025**
(21) Application number: 24186289.5
(22) Date of filing: 03.07.2024
(51) Int. Cl.: H01M 4/131, H01M 4/1391, H01M 4/525, H01M 4/62, H01M 10/0525, H01M 10/42, H01M 4/02

(54) **RECHARGEABLE LITHIUM BATTERY**

(30) Priority: 14.07.2023 KR 20230091936
(71) Applicant: Samsung SDI Co., Ltd., Yongin-si, Gyeonggi-do 17084 (KR)
(72) Inventor: CHO, Erang, 17084 Yongin-si (KR); LIM, Jin-Hyeok, 17084 Yongin-si (KR); SEO, Jinah, 17084 Yongin-si (KR); KOH, Sujeong, 17084 Yongin-si (KR); KIM, Yunhee, 17084 Yongin-si (KR); LEE, Minju, 17084 Yongin-si (KR)
(74) Representative: Marks & Clerk LLP

(57) **Abstract**

A rechargeable lithium battery and the rechargeable lithium battery including a positive electrode is provided. The positive electrode includes a positive active material and sulfur, a negative electrode comprising a negative active material and sulfur, and a non-aqueous electrolyte. An amount of sulfur in the positive electrode is at least twice an amount of sulfur in the negative electrode.

## Description

### BACKGROUND

### 1. Field

According to one or more embodiments, the present disclosure relates to a rechargeable lithium battery.

### 2. Description of the Related Art

Rechargeable lithium batteries having relatively high energy density and that are lightweight and easy to carry are mainly utilized as a driving power source of mobile information terminals such as mobile phones, notebooks, and/or smartphones.

A rechargeable lithium battery is generally fabricated by utilizing materials capable of reversibly intercalating and deintercalating lithium ions as a positive active material and a negative active material. An electrolyte is provided between a positive electrode including the positive active material and a negative electrode including the negative active material.

Lithium-transition metal oxides are utilized as the positive active material of the rechargeable lithium battery, one or more suitable types (kinds) of carbon-based materials are utilized as the negative active material, and lithium salts dissolved in a non-aqueous organic solvent are utilized as the electrolyte.

For example, a rechargeable lithium battery exhibits suitable battery characteristics by utilizing complex reactions, such as those between a positive electrode and an electrolyte, a negative electrode and an electrolyte, and/or the like. Accordingly, the utilization of a suitable electrolyte is one of the important parameters for improving the performance of a rechargeable lithium battery.

### SUMMARY

One or more aspects are directed toward a rechargeable lithium battery exhibiting reduced resistance and suppressed or reduced gas generation during storage (e.g., allowing to stand) at high temperatures. One or more possible additional aspects may be set forth in part in the description which follows and, in part, will be apparent from the description, or may be learned by practice of the presented embodiments of the disclosure.

One or more embodiments provide a rechargeable lithium battery including a positive electrode including a positive active material and sulfur; a negative electrode including a negative active material and sulfur; and a non-aqueous electrolyte, wherein an amount of sulfur included in the positive electrode is about at least twice an amount of sulfur included in the negative electrode.

An amount of sulfur included in the positive electrode may be about two to five times an amount of sulfur included in the negative electrode.

An amount of sulfur included in the positive electrode may be about 0.01 wt% to about 0.7 wt% based on a total 100 wt% of the battery.

An amount of sulfur included in the negative electrode may be more than 0 wt% and at most about 0.33 wt% based on the total 100 wt% of the battery.

The positive active material may be a compound represented by Chemical Formula 1;

Chemical Formula 1 Liₐ₁Niₓ₁Co_{y1}A_{z1}O₂

wherein, 0.9≤a1≤1.1, 0.88≤x1≤0.98, 0.01≤y1≤0.11, 0.01≤z1≤0.11, x1+y1+z1=1, and A may be Mn or Al.

The rechargeable lithium battery may be a battery configured for (e.g., subjected to) a formation charge and discharge.

The positive electrode may include an additive represented by Chemical Formula 2 or at least one additive selected from among Chemical Formulas 3 to 5. 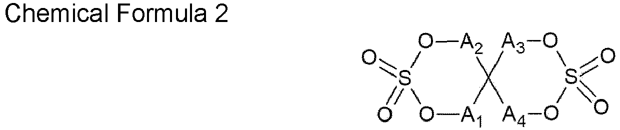 wherein,
A₁, A₂, A₃, and A₄ may each independently be selected from among a covalent bond; a substituent-substituted or unsubstituted C1 to C5 alkylene group; a carbonyl group; and a sulfinyl group, provided that A₁ and A₂ are not concurrently (e.g., simultaneously) a covalent bond and As and A₄ are not concurrently (e.g., simultaneously) a covalent bond.

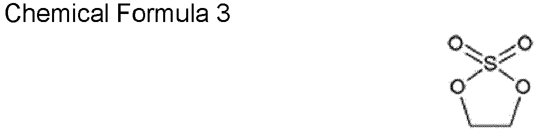

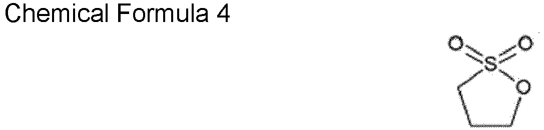

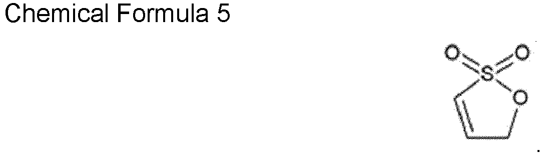

At least some of the above and other features of the invention are set out in the claims.

The rechargeable lithium battery according to one or more embodiments may exhibit suppressed or reduced gas generation and reduced resistance during it being allowed to stand at high temperature.

One or more aspects are directed toward method to form a rechargeable lithium battery.

### BRIEF DESCRIPTION OF THE DRAWING

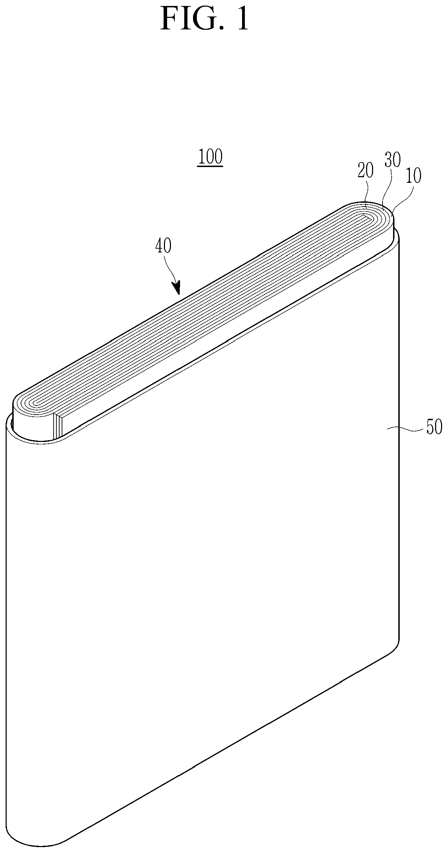

The drawing (FIG. 1) is a schematic diagram showing a rechargeable lithium battery according to one or more embodiments of the present disclosure.

### DETAILED DESCRIPTION

Hereinafter, one or more suitable embodiments of this disclosure will be described in more detail with reference to the accompanying drawings so that those skilled in the art may easily carry out the present disclosure. However, the present disclosure may be embodied in many different forms and is not construed as limited to the example embodiments set forth herein. Accordingly, the embodiments are merely described, by referring to the drawing, to explain aspects of the present description. Expressions such as "at least one of," if (e.g., when) preceding a list of elements, modify the entire list of elements and do not modify the individual elements of the list.

Terms utilized in the specification are utilized to explain embodiments, but are not intended to limit the present disclosure. Expressions in the singular include expressions in plural unless the context clearly dictates otherwise. Unless otherwise defined, all terms (including chemical, technical and scientific terms) utilized herein have the same meaning as commonly understood by one of ordinary skill in the art to which this application belongs. Also, it will be further understood that terms, such as those defined in commonly utilized dictionaries, should be interpreted as having a meaning that is consistent with their meaning in the context of the relevant art and will not be interpreted in an idealized or overly formal sense unless expressly so defined herein.

Example embodiments are described herein with reference to schematic cross-sectional views of embodiments. As such, variations from the shapes of the illustrations as a result, for example, of manufacturing techniques and/or tolerances, are to be expected. Thus, example embodiments should not be construed as limited to the particular shapes of regions illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the drawing are schematic in nature and their shapes are not intended to illustrate the actual shape of a region of a device and are not intended to limit the scope of claims.

Throughout the specification, if (e.g., when) a component, such as a layer, a film, a region, or a plate, is described as being "above" or "on" another component, the component may be directly above another component, or there may be yet another component(s) therebetween. It will be understood that although the terms "first," "second," and/or the like may be utilized herein to describe one or more suitable elements, these elements should not be limited by these terms. These terms are only utilized to distinguish one element from another element. The described terms are utilized only to distinguish one component from another. Components having substantially the same functional configuration in the present specification and drawings are denoted by the same reference numerals, and redundant descriptions thereof will not be provided.

The present disclosure may, however, be embodied in many different forms and should not be construed as limited to the embodiments set forth herein. The embodiments are provided so that this disclosure will be thorough and complete, and will fully convey the scope of the present disclosure to those skilled in the art. Like reference numerals in the drawing denote like elements, and duplicative descriptions thereof may not be provided.

As used herein, expressions such as "at least one of," "one of," and "selected from," if (e.g., when) preceding a list of elements, modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Although the terms "first", "second", "third", and/or the like may be utilized herein to describe one or more suitable elements, components, regions, layers, and/or sections, these elements, components, regions, layers and/or sections should not be limited by these terms. These terms are only utilized to distinguish one element, component, region, layer or section from another region, layer or section. Thus, a first element, component, region, layer, or section discussed could be termed a second element, component, region, layer or section without departing from the teachings of the present disclosure.

The terms utilized herein are for the purpose of describing particular embodiments only and are not intended to be limiting of the present disclosure. As utilized herein, an expression utilized in the singular forms "a", "an" and "the" are intended to include the plural forms as well as encompass the expression "at least one", unless otherwise indicated. The "at least one" should not be construed as singular. As utilized herein, the term "and/or" includes any and all combinations of one or more of the associated listed items. The terms such as "including," "includes," "include," "comprising," "comprises," "comprise," "has," "have," and/or "having" are intended to indicate the existence of features, regions, integers, processes, components, and/or elements disclosed in the specification, and are not intended to preclude the possibility that one or more other features, regions, integers, processes, components, and/or elements thereof may exist or may be added.

Spatially relative terms, such as "under", "lower", "on", "above", or "upper", may be utilized herein for ease of description of the relationship of one element or feature to another element(s) or feature(s) as illustrated in the drawing. It will be understood that the spatially relative terms are intended to encompass different orientations of a device in use or operation, in addition to the orientation depicted in the drawing. For example, if (e.g., when) the device in the drawing is turned over, elements described as "below" other elements or features would then be oriented "above" the other elements or features. The device may be otherwise oriented (rotated 90 degrees or at other orientations) and the spatially relative descriptors utilized herein interpreted accordingly.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

The terms "including," "includes," "include," "comprising," "comprises," "comprise," "has," "have," and/or "having" are intended to designate that the performed characteristics, numbers, steps, constituted elements, or a combination thereof are present, but it should be understood that the possibility of presence or addition of one or more other characteristics, numbers, steps, constituted elements, or a combination are not to be precluded in advance.

The drawing shows that the thickness is enlarged in order to clearly show the one or more suitable layers and regions, and the same reference numerals are given to similar parts throughout the specification. If (e.g., when) an element, such as a layer, a film, a region, a plate, and/or the like is referred to as being "on" or "over" another part, it may include cases where it is "directly on" another element, but also cases where there is another element in between. In contrast, if (e.g., when) an element is referred to as being "directly on" another element, there are no intervening elements present.

### Definitions

The term "combination thereof" may include a mixture, a laminate, a complex, a copolymer, an alloy, a blend, a reactant of constituents.

The term "layer" includes a shape totally formed on the entire surface or a shape partial surface, if (e.g., when) viewed from a plane view.

Herein, "or" is not to be construed as an exclusive meaning, for example, "A or B" is construed to include A, B, A+B, and/or the like.

As utilized herein, if (e.g., when) a definition is not otherwise provided, "copolymerization" refers to a block copolymerization, random copolymerization, graft copolymerization or alternating copolymerization, and "copolymer" refers to a block copolymer, a random copolymer, a graft copolymer, or an alternating copolymer.

As utilized herein, if (e.g., when) a definition is not otherwise provided, a particle diameter (or size) may be an average particle diameter (or size). Such a particle diameter indicates an average particle diameter or size (D50) where a cumulative volume is about 50 volume% in a particle size distribution. The average particle size (D50) may be measured by a method well suitable (e.g., well known) to those skilled in the art, for example, by a particle size analyzer, or by a transmission electron microscopic image, or a scanning electron microscopic image. In some embodiments, a dynamic light-scattering measurement device is utilized to perform a data analysis, and the number of particles is counted for each particle size range, and from this, the average particle diameter (D50) value may be easily obtained through a calculation.

D50 refers to a particle diameter corresponding to 50% of the particles in a cumulative distribution curve measured by a laser diffraction method in which particles are accumulated in the order of particle diameter from the smallest particle to the largest particle.

D90 refers to a particle diameter corresponding to 90% of the particles in a cumulative distribution curve measured by a laser diffraction method in which particles are accumulated in the order of particle diameter from the smallest particle to the largest particle.

D10 refers to a particle diameter corresponding to 10% of the particles in a cumulative distribution curve measured by a laser diffraction method in which particles are accumulated in the order of particle diameter from the smallest particle to the largest particle.

The term "group" may refer to a group of elements in the periodic table numbered from 1 to 18 classified according to a classification system of The International Union of Pure and Applied Chemistry ("IUPAC"). The term "group" may refer to a substituent, e.g., "a C1 to C5 alkylene group."

As utilized herein, if (e.g., when) a definition is not otherwise provided, the term 'substituted' may refer to one substituted with a substituent selected from halogen (F, Br, Cl, or I), a hydroxy group, an alkoxy group, a nitro group, a cyano group, an amino group, an amine group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C30 aryl group, a C7 to C30 arylalkyl group, a C1 to C4 alkoxy group, a C1 to C20 heteroalkyl group, a C3 to C20 heteroarylalkyl group, a C3 to C30 cycloalkyl group, a C3 to C15 cycloalkenyl group, a C6 to C15 cycloalkynyl group, a C2 to C20 heterocycloalkyl group, and a combination thereof, instead of hydrogen of a compound.

The term "hetero" may refer to halogen, oxygen, nitrogen, phosphorous, sulfur, silicon, boron, or a mixture thereof.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications, variations, improvements, and substantial equivalents.

Hereinafter, a positive active material, a positive electrode and including the same, and a method of manufacturing the same will be described in more detail.

### Introduction

A rechargeable lithium battery according to one or more embodiments includes a positive electrode including a positive active material and sulfur; a negative electrode including a negative active material and sulfur; and a non-aqueous electrolyte. An amount of sulfur included in the positive electrode is at least about twice an amount of sulfur included in the negative electrode. According to one or more embodiments, the amount of sulfur included in the positive electrode may be about twice (2 times) to about 5 times the amount of sulfur included in the negative electrode, about 2.2 times to about 5 times, about 2.5 times to about 5 times, or about 3 times to about 5 times.

If (e.g., when) sulfur is included in both (e.g., simultaneously) of the positive electrode and the negative electrode and the amounts of sulfur are satisfied into the described relationship, the surface of the positive electrode reacts with an electrolyte during charge and discharge, and thus a thin layer formed on the surface of the positive electrode may include sulfides. In this way, the preparation of the thin layer including sulfides may suppress or reduce an increase in resistance even if (e.g., when) the battery according to one or more embodiments is allowed to stand at high temperatures, and the gas generation may be effectively suppressed or reduced. The elution of transition metals from the surface of the positive electrode may be inhibited at high temperatures, thereby suppressing the collapse of the active material crystal structure due to the elution of transition metals during charge and discharge.

If (e.g., when) the amount of sulfur included in the positive electrode is the same as the amount of sulfur included in the negative electrode, the thickness of the thin layer formed during charge and discharge may be increased, which results in increases in resistance, so that the desired or suitable effects may not be achieved. In some embodiments, if (e.g., when) the amount of sulfur included in the positive electrode is smaller than the amount of sulfur included in the negative electrode, a thin layer is formed in which sulfide for suppressing resistance increase and gas generation is not enough included, so that the desired or suitable effects may not be achieved.

In one or more embodiments, an amount of sulfur in the positive electrode may be about 0.01 wt% to about 0.7 wt%, about 0.03 wt% to about 0.7 wt%, about 0.03 wt% to about 0.5 wt%, about 0.03 wt% to about 0.4 wt%, or about 0.03 wt% to about 0.3 wt% based on a total 100 wt% of the rechargeable lithium battery. An amount of sulfur in the negative electrode may be more than 0 wt% and at most about 0.33 wt%, about 0.01 wt% to about 0.33 wt%, about 0.01 wt% to about 0.3 wt%, or about 0.01 wt% to 0.2 wt% based on total 100 wt% of the rechargeable lithium battery.

If (e.g., when) the amount of sulfur in the positive electrode is within the described range, the thin layer including sulfide components is well formed during charging and discharge, resulting in sufficiently suppressing the elution of transition metals from the surface of the positive electrode and/or the positive active material at high temperatures. The collapse of the positive active material structure due to the elution of the transition metals may be suppressed or reduced thereby and the side reaction(s) caused by oxidizing the electrolyte on the surface of the positive electrode and/or the positive active material at high voltages and/or high temperatures may be further minimized or reduced, such that the excessive generation of a resistant thin layer may be effectively prevented or reduced. If (e.g., when) the amount of sulfur in the negative electrode is within the described range, the side reaction(s) caused by the reduction of the electrolyte on the surface of the negative electrode and/or the negative active material at high voltage or high temperatures may be further minimized or reduced, and the excessive generation of the resistant thin layer may be prevented or reduced, as similar to the positive electrode.

The ratio of sulfur included in the positive electrode and sulfur included in the negative electrode may be also obtained after the battery is subjected to a formation charge and discharge. The formation charge and discharge may be performed by charging and discharging the rechargeable lithium battery at about 0.1 C to about 0.3 C once to three times.

The effects obtained by satisfying the described ratio of the amount of sulfur included in the positive electrode and the amount of sulfur included in the negative electrode, may be more suitably obtained, if (e.g., when) the positive active material included in the positive electrode is a high-nickel positive active material. The high-nickel positive active material refers to a positive active material in which an amount of nickel is about 88 mol% or more based on about 100 mol% of other metals except for lithium of the metals included in the positive active material. The positive active material according to one or more embodiments may be represented by Chemical Formula 1.

Chemical Formula 1 Liₐ₁Niₓ₁Co_{y1}A_{z1}O₂

wherein,
0.9≤a1≤1.1, 0.88≤x1≤0.98, 0.01≤y1≤0.11, 0.01≤z1≤0.11, x1+y1+z1=1, and A may be Mn or Al. In an embodiment, 0.9≤a1≤1.1, 0.91≤x1≤0.98, 0.01≤y1≤ 0.08, 0.01 ≤z1≤0.08, x1+y1+z1=1, and A is Mn or Al.

If (e.g., when) the battery including the high-nickel positive active material is stored (e.g., allowed to stand) at a high temperature (e.g., at least 60 °C), the structure thereof is unstable compared to a cobalt-based or a low-nickel positive active material. As a result, elution of the transition metal such as cobalt, Mn, Al, and/or the like, may readily occur and thus resistance may be increased, especially, at high temperatures and gas may be severely generated. Accordingly, the effects of adjusting the amounts of sulfur included in the positive electrode and the negative electrode may be greatly realized (e.g., obtained or more desired). For example, the effects for decreasing resistance at a high temperature due to inclusion of sulfur in the positive electrode and the negative electrode may be largely realized (e.g., obtained or more desired).

Because the cobalt-based or the low-nickel positive active material does not cause an increase in resistance when stored at high temperature, the effect by adjusting the amount of sulfur may be not obtained, and if (e.g., when) sulfur is included, it may increase (e.g., actually acts as) resistance and is inappropriate (e.g., to be included or may be less desired).

### Positive Electrode

The positive electrode of the rechargeable lithium battery may include a positive active material layer that includes a positive active material layer composition. The components of the positive active material layer and the positive active material layer composition are described in more detail herein.

In such a rechargeable lithium battery, the positive electrode may include the positive active material layer composition and an additive represented by Chemical Formula 2 and/or at least one additive represented by Chemical Formulas 3 to 5. The positive active material layer composition includes a positive active material, a binder, and a conductive material, as described in more detail herein.

Some embodiments of the present disclosure are directed toward a method to form a rechargeable lithium battery. The method may include adding the additive represented by Chemical Formula 2 and/or at least one additive represented by Chemical Formulas 3 to 5 to the positive active material layer composition. 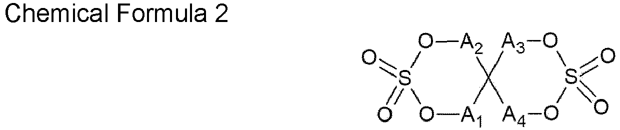 wherein,
A₁, A₂, A₃, and A₄ may each independently be selected from a covalent bond; a substituent-substituted or unsubstituted C1 to C5 alkylene group; a carbonyl group; and a sulfinyl group, provided that A₁ and A₂ are not concurrently (e.g., simultaneously) a covalent bond and A₃ and A₄ are not concurrently (e.g., simultaneously) a covalent bond.

In one or more embodiments, at least one of A₁, A₂, A₃, or A₄ may be an unsubstituted C1 to C5 alkylene group or a substituted C1 to C5 alkylene group.

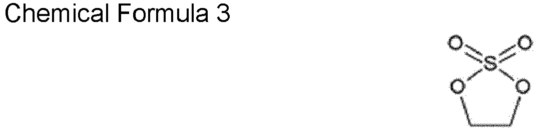

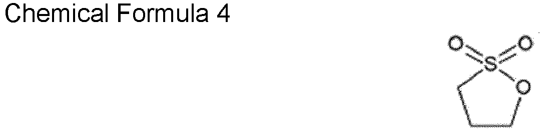

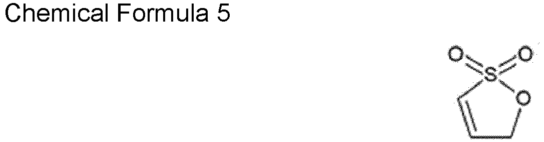

The additive represented by Chemical Formula 2 may be represented by Chemical Formula 2a or Chemical Formula 2b. 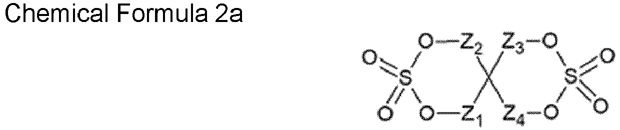 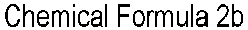 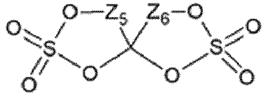 wherein,
Z₁, Z₂, Z₃, Z₄, Z₅, and Z₆ may each independently be -C(E₁)(E₂)-; a carbonyl group; or a sulfinyl group,
E₁ and E₂ may each independently be selected from among hydrogen; halogen; a halogen-substituted or unsubstituted C1 to C20 (e.g., C1 to C5) alkyl group; a halogen-substituted or unsubstituted C2 to C20 (e.g., C2 to C5) alkenyl group; a halogen-substituted or unsubstituted C2 to C20 (e.g., C2 to C5) alkynyl group; a halogen-substituted or unsubstituted C3 to C20 (e.g., C3 to C8) cycloalkenyl group; a halogen-substituted or unsubstituted C3 to C20 (e.g., C3 to C10) heterocyclic group; a halogen-substituted or unsubstituted C6 to C40 (e.g., C6 to C20) aryl group; and a halogen-substituted or unsubstituted C2 to C40 (e.g., C2 to C20) heteroaryl group.

In one or more embodiments, the additive represented by Chemical Formula 2 may be one selected from compounds represented by Chemical Formulas 6 to 9. For example, the additive represented by Chemical Formula 2 may be a compound represented by Chemical Formula 6.

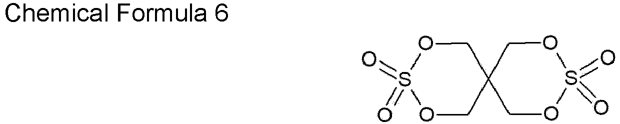

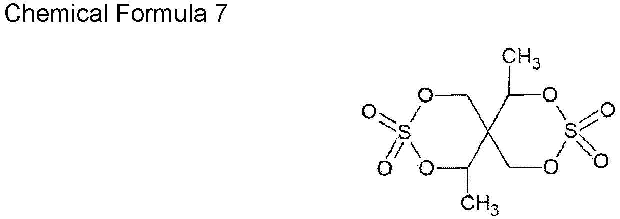

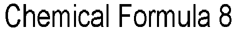

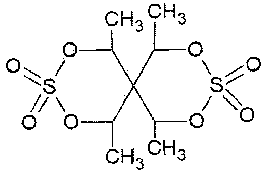

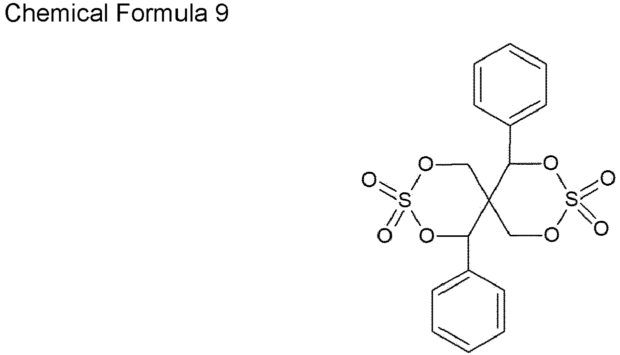

If (e.g., when) the additive is added to the positive active material layer composition, an amount of the additive may be about 0.05 wt% to about 2.1 wt%, about 0.05 wt% to about 1.8 wt%, about 0.05 wt% to about 1 wt%, about 0.05 wt% to about 0.9 wt%, about 0.05 wt% to about 0.5 wt%, about 0.6 wt% to about 1.8 wt%, or about 0.7 wt% to about 2.1 wt% based on 100 wt% of the positive active material layer composition (amount of solid) including the positive active material, the binder, and the conductive material.

If (e.g., when) the additive is added to the positive active material layer composition to prepare a positive electrode, the suitable thin layer may be formed on the surface of the positive electrode and this thin layer may suppress or reduce a reaction if (e.g., when) stored at a high temperature, thereby preventing or reducing gas generation and an increase in resistance.

As such an additive is added during the positive electrode preparation, the sulfur generated from the additive is mainly present in the positive electrode, thereby obtaining the amount of sulfur included in the positive electrode at least twice, for example, or 5 times higher (e.g., up to 5 times higher) than that included in the negative electrode. For example, if (e.g., when) a rechargeable lithium battery including such a positive electrode is charged and discharged, even if (e.g., when) sulfur is moved into the negative electrode, the amount of sulfur included in the negative electrode may be equal to or less than half (i.e., 1/2) of the amount in the positive electrode.

If (e.g., when) the additive is added to an electrolyte, sulfur generated from the additive is all distributed in the positive electrode, the electrolyte, and the negative electrode, so that the amount of sulfur included in the positive electrode may be not be excessively present. For example, the amount of sulfur included in the positive electrode may be twice or more (at least two times), e.g., two to five times more than the amount of sulfur in the negative electrode.

In one or more embodiments, the positive electrode includes a positive active material layer including the positive active material and sulfur, and a current collector supporting the positive active material layer.

In the positive electrode, an amount of the positive active material may be about 90 wt% to about 98 wt% based on the total weight of the positive active material layer.

In one or more embodiments, the positive active material layer may include a binder and a conductive material. The amounts of the binder and the conductive material may be respectively, about 0.995 wt% to 4.97 wt% based on the total weight of the positive active material layer.

The binder improves binding properties of positive active material particles with one another and with a current collector. Examples of the binder may be polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and/or the like, but is not limited thereto.

The conductive material is included to provide electrode conductivity, and any electrically conductive material may be utilized as a conductive material unless it causes a chemical change. Examples of the conductive material may include a carbon-based material such as natural graphite, artificial graphite, carbon black, acetylene black, ketjen black, a carbon fiber and/or the like; a metal-based material of a metal powder or a metal fiber including copper, nickel, aluminium, silver, and/or the like; a conductive polymer such as a polyphenylene derivative; or one or more mixtures thereof.

The current collector may include Al, but is not limited thereto.

The negative electrode includes a negative active material layer including a negative active material and sulfur, and a current collector that supports this negative active material layer.

The negative active material includes a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may be a carbon material, for example, carbon-based negative active material generally utilized in a rechargeable lithium battery. The example of the carbon-based negative active material may be crystalline carbon, amorphous carbon, or a mixture thereof. The crystalline carbon may be unspecified shaped, sheet, flake, spherical, or fiber shaped natural graphite or artificial graphite. The amorphous carbon may be a soft carbon, a hard carbon, a mesophase pitch carbonization product, fired coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a silicon-based negative active material, or a Sn-based negative active material.

The silicon-based negative active material may be or include silicon, a Si-C composite, SiOₓ (0<x<2), or a Si-Q alloy. In some embodiments, Q is an element selected from among an alkali metal, an alkaline-earth metal, a Group 13 element, a Group 14 element, a Group 15 element, a Group 16 element, a transition metal, a rare earth element, and a combination thereof, and Q excludes (e.g., does not include) Si.

The Sn-based negative active material may be or include Sn, SnO₂, a Sn-R alloy, a Sn-carbon composite, and/or the like. In some embodiments, R is an element selected from among an alkali metal, an alkaline-earth metal, a Group 13 element, a Group 14 element, a Group 15 element, a Group 16 element, a transition metal, a rare earth element, and a combination thereof, and R excludes (e.g., does not include Sn. At least one of these materials may be mixed with SiO₂.

In some embodiments, Q and/or R may be selected from among Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, and Po, or a combination thereof.

The transition metal oxide may be or include a lithium titanium oxide.

The Si-C composite may be a composite of silicon and amorphous carbon. An average particle diameter (D₅₀) of the Si-C composite may be, for example, about 0.5 micrometer (µm) to about 20 µm. According to one or more embodiments, the Si-C composite may be or include silicon particles and amorphous carbon coated on a surface of the silicon particles. For example, the Si-C composite may include secondary particles (core) (e.g., in each) where silicon primary particles are agglomerated and an amorphous carbon coating layer (shell) is positioned on the surface of (each of) the secondary particles. The amorphous carbon may (also) be positioned between the silicon primary particles, for example, may be coated on the silicon primary particles. The secondary particles may (also) be distributed in the amorphous carbon.

The Si-C composite may further include crystalline carbon. For example, the Si-C composite may include a core (e.g., secondary particles) including crystalline carbon and silicon particles and an amorphous carbon coating layer positioned on the surface of the core. The crystalline carbon may be artificial graphite, natural graphite, or a combination thereof. The amorphous carbon may be soft carbon, hard carbon, mesophase pitch carbide, sintered cokes, and/or the like.

The silicon particles (e.g., silicon primary particles) may be nano silicon particles. A particle diameter of the nano silicon particles may be about 10 nanometer (nm) to about 1,000 nm, and according to one or more embodiments, may be about 20 nm to about 900 nm, about 20 nm to about 800 nm, about 20 nm to about 500 nm, about 20 nm to about 300 nm, or about 20 nm to about 150 nm. If (e.g., when) the average particle diameter of the silicon particles (e.g., silicon primary particles) is within the described range, an extreme volume expansion caused during charge and discharge may be suppressed or reduced, and a breakage of the conductive path due to crushing of particles may be prevented or reduced.

If (e.g., when) the Si-C composite includes silicon and amorphous carbon, an amount of silicon may be about 10 wt% to about 50 wt% and an amount of amorphous carbon may be about 50 wt% to about 90 wt%, based on 100 wt% of the Si-C composite. In another embodiment, the Si-C composite includes silicon, amorphous carbon, and crystalline carbon, and an amount of silicon may be about 10 wt% to about 50 wt%, an amount of crystalline carbon may be about 10 wt% to about 70 wt%, and an amount of amorphous carbon may be about 20 wt% to about 40 wt%, based on 100 wt% of the Si-C composite.

The amorphous carbon coating layer may have a thickness of about 5 nm to about 100 nm. The silicon particles (e.g., silicon primary particles) may include silicon (e.g., elemental or itself), a silicon alloy, or an oxidized silicon (e.g., may be presented in silicon, a silicon alloy or an oxidized silicon form). The oxidized silicon may be represented by SiOₓ (0<x<2). An atomic weight ratio of Si:O representing a degree of oxidation may be about 99:1 to about 33:67. As utilized herein, an average particle diameter D₅₀ indicates a diameter of particle where the cumulative volume corresponds to about 50 volume% in the particle size distribution.

In one or more embodiments, the Si-C composite may be included as a first negative active material, and crystalline carbon may be included as a second negative active material. A mixing ratio of the first negative active material and the second negative active material may be a weight ratio of about 1:99 to about 50:50. In another embodiment, the negative active material may include the first negative active material and the second negative active material at a weight ratio of about 5:95 to about 20:80.

The negative active material layer may further include the negative active material and a binder, and may optionally further include a conductive material.

In the negative active material layer, an amount of the negative active material may be about 95 wt% to about 99 wt% based on the total weight of the negative active material layer. In the negative active material layer, an amount of the binder may be about 1 wt% to about 5 wt% based on the negative active material layer. In the case of further including the conductive material, the negative active material may be included at an amount of about 90 wt% to about 98 wt%, the binder may be included at an amount of about 1 wt% to about 5 wt%, and the conductive material may be included at an amount of about 1 wt% to about 5 wt%.

The binder improves binding properties of negative active material particles with one another and with a current collector. The binder may be a non-aqueous binder, an aqueous binder, or combination thereof.

The non-aqueous binder may be an ethylene propylene copolymer, polyacrylonitrile, polystyrene, polyvinyl chloride, carboxylated polyvinylchloride, polyvinyl fluoride, polyurethane, polytetrafluoroethylene, polyvinylidene fluoride, polyethylene, polypropylene, polyamide imide, polyimides, or a combination (e.g., one or more combinations) thereof.

The aqueous binder may be a styrene-butadiene rubber, an acrylated styrene-butadiene rubber, an acrylonitrile-butadiene rubber, an acrylic rubber, a butyl rubber, a fluorine rubber, an ethylene oxide-containing polymer, polyvinyl pyrrolidone, polyepichlorohydrin, polyphosphazene, an ethylene propylene diene copolymer, polyvinyl pyridine, chlorosulfonated polyethylene, latex, a polyester resin, an acrylic resin, a phenol resin, an epoxy resin, polyvinyl alcohol, or a combination (e.g., one or more combinations) thereof.

The negative binder may include a cellulose-based compound. The negative binder may include the aqueous binder together with the cellulose-based compound. The cellulose-based compound includes one or more of carboxymethyl cellulose, hydroxypropylmethyl cellulose, methyl cellulose, or alkali metal salts thereof. The alkali metal may be Na, K, or Li. The cellulose-based compound may serve as a binder, and may impart viscosity to serve as a thickener. Therefore, an amount of the cellulose-based compound may be appropriately adjusted within the amount of the binder, but it may be, for example, about 0.1 parts by weight to about 3 parts by weight based on 100 parts by weight of the negative active material.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, and/or the like; a metal-based material of a metal powder or a metal fiber including copper, nickel, aluminium, silver, and/or the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, caprolactone, and/or the like. The ether-based solvent may be dibutyl ether, tetraglyme, diglyme, dimethoxyethane, 2-methyltetrahydrofuran, tetrahydrofuran, and/or the like. The ketone-based solvent may include cyclohexanone, and/or the like. The alcohol-based solvent may include ethyl alcohol, isopropyl alcohol, and/or the like, and examples of the aprotic solvent include nitriles such as R-CN (where R is a C2 to C20 linear, branched, or cyclic hydrocarbon, and may include a double bond, an aromatic ring, or an ether bond), amides such as dimethylformamide, dioxolanes such as 1,3-dioxolane, sulfolanes, and/or the like.

The non-aqueous organic solvent may be utilized alone or in a mixture. If (e.g., when) the non-aqueous organic solvent is utilized in a mixture, the mixture ratio may be controlled or selected in accordance with a desirable battery performance, and it may be well suitable to those skilled in the related art.

The carbonate-based solvent may include a mixture with a cyclic carbonate and a linear carbonate. The cyclic carbonate and linear carbonate are mixed together in a volume ratio of about 1:1 to about 1:9, and if (e.g., when) the mixture is utilized as an electrolyte, it may have enhanced performance.

The non-aqueous organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 20.

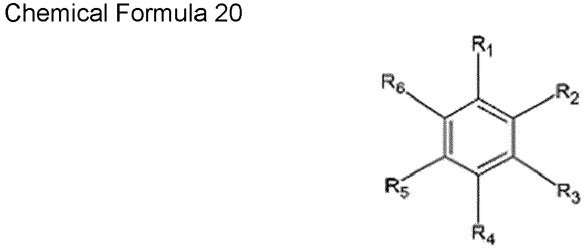

In Chemical Formula 20, R₁ to R₆ may each independently be the same or different and are selected from hydrogen, a halogen, a C1 to C10 alkyl group, a haloalkyl group (e.g, a C1 to C10 haloalkyl group), and a combination thereof.

Specific examples of the aromatic hydrocarbon-based organic solvent may be selected from among benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and/or one or more combinations thereof.

The electrolyte may further include vinylethyl carbonate, vinylene carbonate, and/or an ethylene carbonate-based compound represented by Chemical Formula 21 as an additive for improving cycle life.

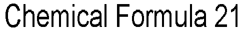

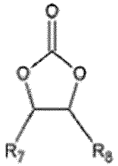

In Chemical Formula 21, R₇ and R₈ may each independently be the same or different and may each be independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not concurrently (e.g., simultaneously) hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, fluoroethylene carbonate, and/or the like. An amount of the additive for improving the cycle-life characteristics may be utilized within an appropriate or suitable range.

The lithium salt dissolved in an organic solvent supplies the battery with lithium ions, generally (e.g., basically) operates the rechargeable lithium battery, and improves transportation of the lithium ions between a positive electrode and a negative electrode. Examples of the lithium salt include at least one or two supporting salt(s) selected from among LiPF₆, LiBF₄, LiSbF₆, LiAsFs, LiN(SO₂C₂F₅)₂, Li(CF₃SO₂)₂N, LiN(SO₃C₂F₅)₂, Li(FSO₂)₂N (lithium bis(fluorosulfonyl)imide: LiFSI), LiC₄F₉SO₃, LiClO₄, LiAlO₂, LiAlCl₄, LiPO₂F₂, LiN(CₓF₂ₓ₊₁SO₂)(C_{y}F_{2y+1}SO₂), wherein x and y are natural numbers, for example, an integer of about 1 to about 20, lithium difluoro(bisoxolato)phosphate, LiCl, Lil, LiB(C₂O₄)₂ (lithium bis(oxalato)borate: LiBOB) and lithium difluoro(oxalato)borate (LiDFOB). A concentration of the lithium salt may range from about 0.1 M to about 2.0 M. If (e.g., when) the lithium salt is included at the described concentration range, an electrolyte may have excellent or suitable performance and lithium ion mobility due to optimal or suitable electrolyte conductivity and viscosity.

A separator may be provided between the positive electrode and the negative electrode depending on a type or kind of a rechargeable lithium battery.

The separator may include a porous substrate and a coating layer including an organic material, an inorganic material, or a combination thereof on one or both (e.g., opposite) surfaces of the porous substrate.

The porous substrate may be a polymer film formed of any one selected polymer of polyolefin such as polyethylene, polypropylene, and/or the like, polyester such as polyethylene terephthalate, polybutylene terephthalate, and/or the like, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON (tetrafluoroethylene), or polytetrafluoroethylene, or a copolymer or mixture of two or more thereof.

The porous substrate may have a thickness of about 1 µm to about 40 µm, and, for example, about 1 µm to about 30 µm, about 1 µm to about 20 µm, about 5 µm to about 15 µm, or about 10 µm to about 15 µm.

The organic material may include (meth)acryl-based copolymer including a first structure unit derived from (meth)acrylamide and a second structure unit including at least one structure unit derived from (meth)acrylic acid or (meth)acrylate, or structure unit from (meth)acrylamido sulfonate, or a salt thereof.

The inorganic material may include inorganic particles selected from among Al₂O₃, SiO₂, TiO₂, SnO₂, CeO₂, MgO, NiO, CaO, GaO, ZnO, ZrO₂, Y₂O₃, SrTiOs, BaTiOs, Mg (OH)₂, and boehmite, and/or a combination thereof, but is not limited thereto. An average particle diameter D₅₀ of the inorganic particle may have about 1 nm to about 2000 nm, and, for example, about 100 nm to about 1000 nm, about 100 nm to about 700 nm.

The organic material and an inorganic material may be mixed in one coating layer, or a coating layer including an inorganic material may be stacked.

The coating layer may have, respectively, a thickness of about 0.5 µm to about 20 µm, and for example, about 1 µm to about 10 µm, or about 1 µm to about 5 µm.

The drawing (FIG. 1) is an exploded perspective view of a rechargeable lithium battery according to one or more embodiments. The rechargeable lithium battery according to some embodiments is illustrated as a prismatic battery but is not limited thereto and may include variously-shaped batteries such as a cylindrical battery, a pouch battery, and/or the like.

Referring to the drawing, a rechargeable lithium battery 100 according to one or more embodiments may include an electrode assembly 40 manufactured by winding a separator 30 provided between a positive electrode 10 and a negative electrode 20 and a case 50 housing the electrode assembly 40. An electrolyte may be impregnated in the positive electrode 10, the negative electrode 20 and the separator 30.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Hereinafter, examples of the present disclosure and comparative examples are described. These examples, however, are not in any sense to be interpreted as limiting the scope of the present disclosure.

### EXAMPLES

### Comparative Example 1

98 wt% of a LiNi_{0.8}Co_{0.1}Al_{0.1}O₂ positive active material, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

97 wt% of an artificial graphite negative active material, 1 wt% of a ketjen black conductive material, 1 wt% of a styrene-butadiene rubber binder, and 1 wt% of a carboxymethyl cellulose thickener were mixed in a distilled water solvent to prepare a negative active material slurry. The negative active material slurry was coated on a copper foil, dried, and pressurized to prepare a negative electrode.

1.15 M LiPF₆ was dissolved in a non-aqueous organic solvent mixed with ethylene carbonate, ethylmethyl carbonate, and dimethyl carbonate at a volume% of 2:4:4 volume %, and then vinylene carbonate (VC) and vinylethyl carbonate (VEC) were added thereto, thereby preparing an electrolyte. An amount of vinylene carbonate was 1.5 wt% based on the total 100 wt% of the electrolyte, and an amount of vinylethyl carbonate was 0.5 wt% based on the total 100 wt% of the electrolyte.

Utilizing the positive electrode, the negative electrode, and the electrolyte, a 18650 cylindrical rechargeable lithium cell was fabricated by the general procedure.

### Example 1

97.95 wt% of a LiNi_{0.91}Co_{0.06}Al_{0.03}O₂ positive active material, 0.05 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

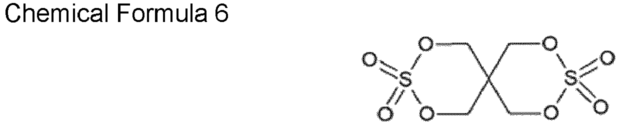

Utilizing the positive electrode, and the negative electrode and the electrolyte according to Comparative Example 1, an 18650 cylindrical rechargeable lithium cell was fabricated by the general procedure.

### Example 2

97.9 wt% of a LiNi_{0.91}Co_{0.06}Al_{0.03}O₂ positive active material, 0.1 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

Utilizing the positive electrode, and the negative electrode and the electrolyte according to Comparative Example 1, an 18650 cylindrical rechargeable lithium cell was fabricated by the general procedure.

### Example 3

97.7 wt% of a LiNi_{0.91}Co_{0.06}Al_{0.03}O₂ positive active material, 0.3 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

Utilizing the positive electrode, and the negative electrode and the electrolyte according to Comparative Example 1, an 18650 cylindrical rechargeable lithium cell was fabricated by the general procedure.

### Comparative Example 2

97.5 wt% of a LiNi_{0.8}Co_{0.1}Al_{0.1}O₂ positive active material, 0.5 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

Utilizing the positive electrode, and the negative electrode and the electrolyte according to Comparative Example 1, an 18650 cylindrical rechargeable lithium cell was fabricated by the general procedure.

### Comparative Example 3

97.5 wt% of a LiCoO₂ positive active material, 0.5 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

Utilizing the positive electrode, and the negative electrode and the electrolyte according to Comparative Example 1, an 18650 cylindrical rechargeable lithium cell was fabricated by the general procedure.

### Example 4

97.5 wt% of a LiNi_{0.91}Co_{0.06}Al_{0.03}O₂ positive active material, 0.5 wt% of an additive of Chemical Formula 6, 1 wt% of a polyvinylidene fluoride binder, and 1 wt% of a ketjen black conductive material were mixed in an N-methyl pyrrolidone solvent to prepare a positive active material slurry. The positive active material slurry was coated on an aluminium foil, dried, and pressurized to prepare a positive electrode.

Utilizing the positive electrode, and the negative electrode and the electrolyte according to Comparative Example 1, an 18650 cylindrical rechargeable lithium cell was fabricated by the general procedure.

### Example 5

A positive electrode was prepared by the same procedure as in Example 1, except that an additive of Chemical Formula 3 was utilized instead of the additive of Chemical Formula 6.

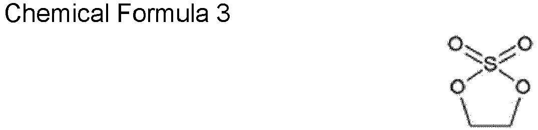

Utilizing the positive electrode, and the negative electrode and the electrolyte according to Comparative Example 1, an 18650 cylindrical rechargeable lithium cell was fabricated by the general procedure.

### Example 6

A positive electrode was prepared by the same procedure as in Example 2, except that an additive of Chemical Formula 3 was utilized instead of the additive of Chemical Formula 6.

Utilizing the positive electrode, and the negative electrode and the electrolyte according to Comparative Example 1, an 18650 cylindrical rechargeable lithium cell was fabricated by the general procedure.

### Example 7

A positive electrode was prepared by the same procedure as in Example 3, except that an additive of Chemical Formula 3 was utilized instead of the additive of Chemical Formula 6.

Utilizing the positive electrode, and the negative electrode and the electrolyte according to Comparative Example 1, an 18650 cylindrical rechargeable lithium cell was fabricated by the general procedure.

### Example 8

A positive electrode was prepared by the same procedure as in Example 4, except that an additive of Chemical Formula 3 was utilized instead of the additive of Chemical Formula 6.

Utilizing the positive electrode, and the negative electrode and the electrolyte according to Comparative Example 1, an 18650 cylindrical rechargeable lithium cell was fabricated by the general procedure.

### Comparative Example 4

A positive electrode was prepared by the same procedure as in Comparative Example 2, except that an additive of Chemical Formula 3 was utilized instead of the additive of Chemical Formula 6.

Utilizing the positive electrode, and the negative electrode and the electrolyte according to Comparative Example 1, an 18650 cylindrical rechargeable lithium cell was fabricated by the general procedure.

### Experimental Example 1: Evaluation of sulfur amount

The rechargeable lithium cells according to Comparative Examples 1 to 4 and Examples 1 to 8 were formation charged and discharged at 0.1 C once. From the formation charged and discharged cells, the positive electrode and the negative electrode were respectively separated and collected, and then amounts of sulfur thereon were measured by TOF-SIMS (Time-of-Flight Secondary Ion Mass Spectrometry) method, respectively. Among the results, the results of Comparative Examples 1 to 3 and Examples 1 to 4 are shown in Table 1 and the results of Comparative Examples 1 and 4, and Examples 5 to 8 are shown in Table 2.

### Experimental Example 2: Evaluation of capacity retention

The cells after formation charging and discharging in the Experimental Example 1 were charged and discharged at 0.33 C under 45 °C for 300 cycles. A ratio of 300^{th} discharge capacity relative to 1^{st} discharge capacity was calculated. Among the results, the results of Comparative Examples 1 to 3 and Examples 1 to 4 are shown in Table 1 as a capacity retention and the results of Comparative Examples 1 and 4, and Examples 5 to 8 are shown in Table 2 as a capacity retention.

### Experimental Example 3: Evaluation of DC resistance DC-IR: Direct current internal resistance

The cells after formation charging and discharging in the Experimental Example 1 were constant current/constant voltage charged under a condition of 0.2 C, 4.25 V, and a 0.05 C cut-off at 45 °C, paused for 10 minutes, constant current discharged under a condition of 0.33 C and a 2.80 V cut-off, and paused for 10 minutes as a one cycle, and this cycle was repeated 300 cycles. In each cycle, a voltage drop (V) was measured, while a current flew at 1 C for 10 seconds under a SOC50 (i.e., charged to be 50% of charge capacity based on 100% of entire battery charge capacity, which is 50% discharged in a discharge state). From these results, DC internal resistance was calculated.

Percent value (%) of DC internal resistance (DC-IR) at 300^{th} cycle relative to DC internal resistance at 1^{st} cycle was calculated. Among the results, the results of Comparative Examples 1 to 3 and Examples 1 to 4 are shown in Table 1 as a DCIR increase ratio and the results of Comparative Examples 1 and 4, and Examples 5 to 8 are shown in Table 2 as a DCIR increase ratio.

**Table 1**

| | Sulfur amount included in positive electrode (wt%)/ sulfur amount included in negative electrode (wt%), Times | Capacity retention (%) | DCIR increase ratio (%) |
|---|---|---|---|
| Example 1 | 0.038/0.012, about 3.2 times | 86.10 | 122.70 |
| Example 2 | 0.072/0.024, about 3 times | 85.60 | 123.10 |
| Example 3 | 0.221/0.079, about 2.8 | 85.00 | 125.60 |
| Example 4 | 0.346/0.154, about 2.2 times | 83.50 | 130.50 |
| Comparative Example 1 | 0/0 | 77.40 | 148.10 |
| Comparative Example 2 | 0.31/0.19, about 1.6 times | 82.60 | 138.30 |
| Comparative Example 3 | 0.33/0.17, about 1.9 times | 82.50 | 133.70 |

As shown in Table 1, the rechargeable lithium cells of Examples 1 to 4, where the amount of sulfur included in the positive electrode was twice or more than that included in the negative electrode (i.e., by adding the additive of Chemical Formula 6 to the positive electrode), exhibited a higher capacity retention and a lower DC-IR increase ratio compared to Comparative Examples 1 to 3.

**Table 2**

| | Sulfur amount included in positive electrode (wt%)/ sulfur amount included in negative electrode (wt%), Times | Capacity retention (%) | DCIR increase ratio (%) |
|---|---|---|---|
| Example 5 | 0.036/0.014, about 2.6 times | 85.70 | 122.10 |
| Example 6 | 0.069/0.031, about 2.2 times | 85.20 | 122.50 |
| Example 7 | 0.218/0.082, about 2.7 times | 84.30 | 125.90 |
| Example 8 | 0.335/0.165, about 2 times | 82.50 | 131.30 |
| Comparative Example 1 | 0/0 | 77.40 | 148.10 |
| Comparative Example 4 | 0.30/0.20, about 1.5 times | 80.1 | 139.7 |

As shown in Table 2, the rechargeable lithium cells of Examples 5 to 8, where the amount of sulfur included in the positive electrode was twice or more than that included in the negative electrode (i.e., by adding the additive of Chemical Formula 3 to the positive electrode), exhibited higher capacity retention and lower DC-IR increase ratio, compared to Comparative Examples 1 and 4.

### Experimental Example 4: Evaluation of storage at high temperature

The cells after formation charging and discharging in the Experimental Example 1 was charged at 4.25 V to measure a charge capacity. The cells were stored at 60 °C for 30 days. After storing for 30 days, the cells were charged and discharged at 0.33 C once to measure a ratio of charge capacity after storing for 30 days relative to charge capacity before storing. Among the results, the results of Comparative Examples 1 to 3 and Examples 1 to 4 are shown in Table 3 and the results of Comparative Examples 1 and 4, and Examples 5 to 8 are shown in Table 4, as storage capacity after allowing to stand.

The cells after formation charging and discharging in the Experimental Example 1 were discharged at a constant current of 10 A for 10 seconds under a fully charged state (SOC 100, state of charge =100%), discharged at a constant current of 1 A for 10 seconds, and discharged at a constant current of 10 A for 4 seconds to measure a voltage drop. From these results, a direct current (DC) resistance at 1^{st} day was measured. Thereafter, these cells were stored at 60 °C for 30 days to measure a voltage drop. From these results, DC resistance after storing for 30 days was calculated. Percent value (%) of DC internal resistance (DC-IR) after 30 days relative to DC internal resistance at 1^{st} day was calculated.

Among the results, the results of Comparative Examples 1 to 3 and Examples 1 to 4 are shown in Table 3 as a storage DCIR increase ratio and the results of Comparative Examples 1 and 4, and Examples 5 to 8 are shown in Table 4 as a storage DCIR increase ratio.

**Table 3**

| | Sulfur amount included in positive electrode (wt%)/ sulfur amount included in negative electrode (wt%), Times | Storage capacity after allowing to stand (%) | Storage DCIR increase ratio (%) |
|---|---|---|---|
| Example 1 | 0.038/0.012, about 3.2 times | 90.10 | 135.30 |
| Example 2 | 0.072/0.024, about 3 times | 90.30 | 134.90 |
| Example 3 | 0.221/0.079, about 3 times | 89.50 | 138.10 |
| Example 4 | 0.346/0.154, about 2.2 times | 88.90 | 143.30 |
| Comparative Example 3 | 0.33/0.1, about 1.9 times | 83.10 | 160.10 |
| Comparative Example 1 | 0/0 | 86.5 | 155.2 |
| Comparative Example 2 | 0.31/0.19, about 1.6 times | 88.8 | 150.3 |

As shown in Table 3, the rechargeable lithium cells of Examples 1 to 4 where the amount of sulfur included in the positive electrode was twice or more than that included in the negative electrode (i.e., by adding the additive of Chemical Formula 6 to the positive electrode), exhibited excellent or suitable high-temperature storage characteristics, compared to Comparative Examples 1 to 3.

**Table 4**

| | Sulfur amount included in positive electrode (wt%)/ sulfur amount included in negative electrode (wt%), Times | Storage capacity after allowing to stand (%) | Storage DCIR increase ratio (%) |
|---|---|---|---|
| Example 5 | 0.036/0.014, about 2.6 times | 89.80 | 139.10 |
| Example 6 | 0.069/0.031, about 2.2 times | 89.90 | 138.80 |
| Example 7 | 0.218/0.082, about 2.7 times | 88.50 | 140.70 |
| Example 8 | 0.335/0.165, about 2 times | 87.10 | 142.20 |
| Comparative Example 1 | 0/0 | 83.10 | 160.10 |
| Comparative Example 4 | 0.30/0.20, about 1.5 times | 86.40 | 148.1 |

As shown in Table 4, the rechargeable lithium cells of Examples 5 to 8, where the amount of sulfur included in the positive electrode was twice or more than that included in the negative electrode (i.e., by adding the additive of Chemical Formula 3 to the positive electrode), exhibited excellent or suitable high-temperature storage characteristics, compared to Comparative Examples 1 and 4. The storage DC-IR increase ratio of the rechargeable lithium cells according to Examples 5 to 8 exhibited lower than Comparative Examples 1 and 4.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this present disclosure has been described in connection with what is presently considered to be practical example embodiments, it is to be understood that the present disclosure is not limited to the disclosed embodiments, but, on the contrary, is intended to cover one or more suitable modifications and equivalent arrangements included within the scope of the appended claims and equivalents thereof. Therefore, the aforementioned embodiments should be understood to be examples but not limiting the present disclosure in any way.

## Claims

1. A rechargeable lithium battery, comprising:
a positive electrode comprising a positive active material and an amount of sulfur;
a negative electrode comprising a negative active material and an amount of sulfur; and
a non-aqueous electrolyte,
wherein the amount of sulfur comprised in the positive electrode is at least twice the amount of sulfur comprised in the negative electrode.

2. The rechargeable lithium battery as claimed in claim 1, wherein the amount of sulfur comprised in the positive electrode is two times to five times the amount of sulfur comprised in the negative electrode.

3. The rechargeable lithium battery as claimed in claim 1 or claim 2,
wherein the amount of sulfur comprised in the positive electrode is about 0.01 wt% to about 0.7 wt% based on a total 100 wt% of the battery, optionally wherein the amount of sulfur comprised in the positive electrode is about 0.03 wt% to about 0.7 wt% based on a total 100 wt% of the battery.

4. The rechargeable lithium battery as claimed in any one of claims 1 to 3, wherein the amount of sulfur comprised in the negative electrode is more than 0 wt% and at most about 0.33 wt% based on a total 100 wt% of the battery, optionally wherein the amount of sulfur comprised in the negative electrode is about 0.01 wt% to about 0.33 wt% based on a total 100 wt% of the battery.

5. The rechargeable lithium battery as claimed in any one of claims 1 to 4, wherein the positive active material is a compound represented by Chemical Formula 1;
Chemical Formula 1 Liₐ₁Niₓ₁Co_{y1}A_{z1}O₂,
and
wherein,
0.9≤a1≤1.1, 0.88≤x1≤0.98, 0.01≤y1≤0.11, 0.01≤z1≤0.11, x1+y1+z1=1, and A is Mn or Al.

6. The rechargeable lithium battery as claimed in any one of claims 1 to 5, wherein the rechargeable lithium battery is a battery configured for formation charging and discharging, optionally wherein the formation charging and discharging is performed at about 0.1 C to about 0.3 C for one time to three times.

7. The rechargeable lithium battery as claimed in any one of claims 1 to 6, wherein the positive electrode comprises a positive active material layer that comprises a positive active material layer composition comprising the positive active material, and an additive represented by Chemical Formula 2 or one or more additives represented by one or more selected from among Chemical Formulas 3 to 5: 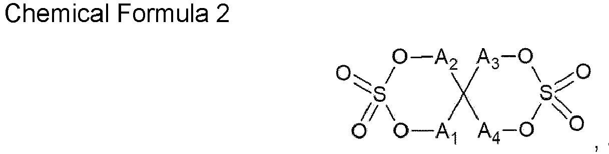 and
wherein,
A₁, A₂, A₃ and A₄ are each independently selected from among a covalent bond; a substituent-substituted or unsubstituted C1 to C5 alkylene group; a carbonyl group; and a sulfinyl group, provided that A1 and A2 are not concurrently a covalent bond and As and A₄ are not concurrently a covalent bond;

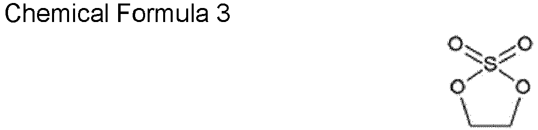

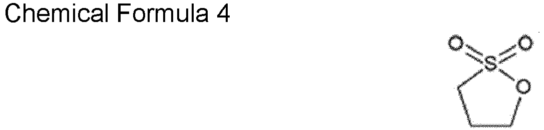

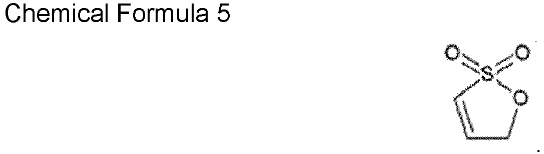

8. The rechargeable lithium battery as claimed in claim 7, wherein the additive represented by Chemical Formula 2 is represented by Chemical Formula 2a or Chemical Formula 2b: 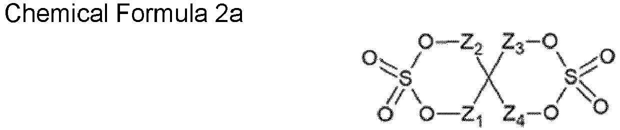 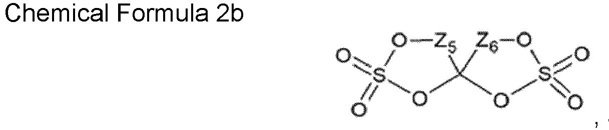 and
wherein,
Z₁, Z₂, Z₃, Z₄, Z₅, and Z₆ are each independently -C(E₁)(E₂)-; a carbonyl group; or a sulfinyl group, and
E₁ and E₂ are each independently selected from among hydrogen; halogen; a halogen-substituted or unsubstituted C1 to C20 alkyl group; a halogen-substituted or unsubstituted C2 to C20 alkenyl group; a halogen-substituted or unsubstituted C2 to C20 alkynyl group; a halogen-substituted or unsubstituted C3 to C20 cycloalkenyl group; a halogen-substituted or unsubstituted C3 to C20 heterocyclic group; a halogen-substituted or unsubstituted C6 to C40 aryl group; and a halogen-substituted or unsubstituted C2 to C40 heteroaryl group.

9. The rechargeable lithium battery as claimed in claim 7, wherein:
(i) the additive represented by Chemical Formula 2 is at least one compound represented by at least one selected from among Chemical Formulas 6 to 9: 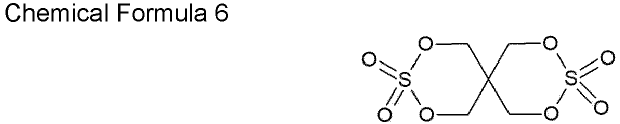 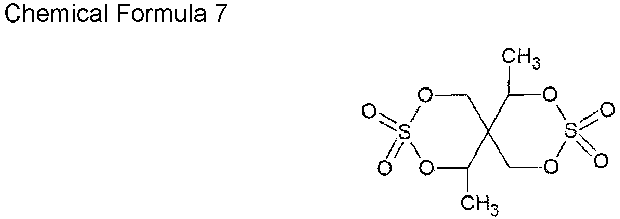 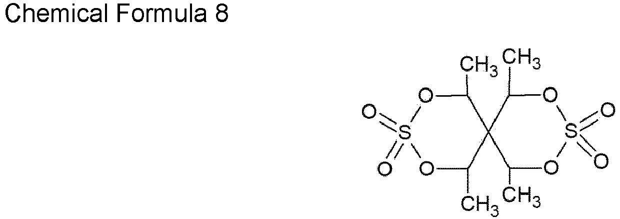 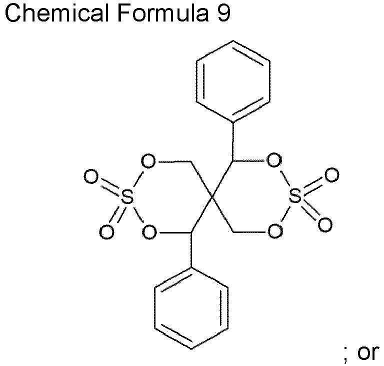
(ii) the additive represented by Chemical Formula 2 is a compound represented by Chemical Formula 6.

10. The rechargeable lithium battery as claimed in any one of claims 7 to 9, wherein an amount of the additive represented by Chemical Formula 2 or the one or more additives represented by one or more selected from among Chemical Formulas 3 to 5 is about 0.05 wt% to about 2.1 wt% based on a total of 100 wt% of the positive active material layer composition.

11. The rechargeable lithium battery as claimed in any one of claims 1 to 10, wherein a charge capacity of the battery after storing at 60 °C for 30 days is at least 87% of a charge capacity of the battery before storing.

12. A method to form a rechargeable lithium battery, the method comprising:
adding an additive represented by Chemical Formula 2 or one or more additives represented by one or more selected from among Chemical Formulas 3 to 5 to form a positive active material layer composition for a positive electrode; 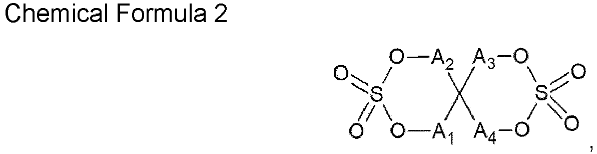 and
wherein,
A₁, A₂, A₃ and A₄ are each independently selected from a covalent bond; a substituent-substituted or unsubstituted C1 to C5 alkylene group; carbonyl group; or a sulfinyl group, provided that A1 and A2 are not concurrently a covalent bond and As and A₄ are not concurrently a covalent bond; 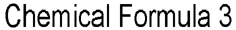 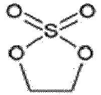 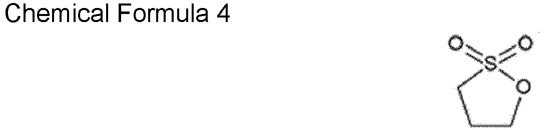 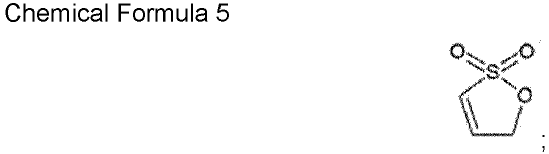 and
subjecting the positive electrode in a battery to a formation charging and discharging at about 0.1 C to about 0.3 C for one time to three times to from the rechargeable lithium battery.

13. The method as claimed in claim 12, wherein the additive represented by Chemical Formula 2 is represented by Chemical Formula 2a or Chemical Formula 2b: 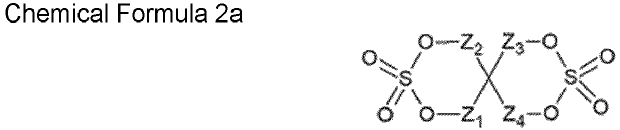 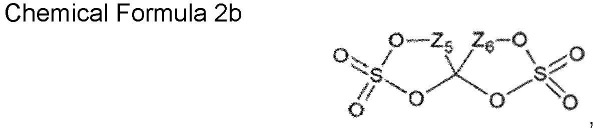 and
wherein,
Z₁, Z₂, Z₃, Z₄, Z₅, and Z₆ are each independently -C(E₁)(E₂)-; a carbonyl group; or a sulfinyl group, and
E₁ and E₂ are each independently selected from among hydrogen; halogen; a halogen-substituted or unsubstituted C1 to C20 alkyl group; a halogen-substituted or unsubstituted C2 to C20 alkenyl group; a halogen-substituted or unsubstituted C2 to C20 alkynyl group; a halogen-substituted or unsubstituted C3 to C20 cycloalkenyl group; a halogen-substituted or unsubstituted C3 to C20 heterocyclic group; a halogen-substituted or unsubstituted C6 to C40 aryl group; and a halogen-substituted or unsubstituted C2 to C40 heteroaryl group.

14. The method as claimed in claim 12, wherein:
(i) the additive represented by Chemical Formula 2 is at least one compound represented by at least one selected from among Chemical Formulas 6 to 9: 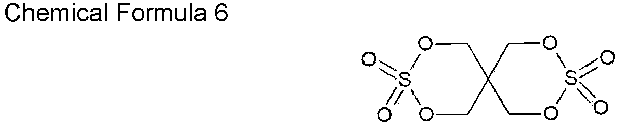 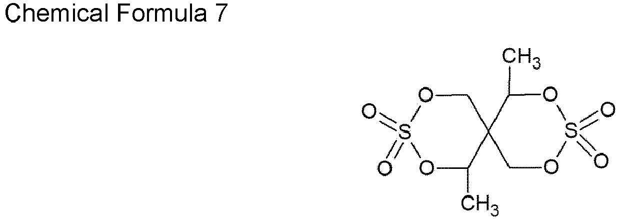 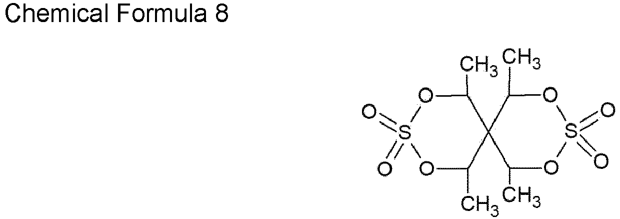 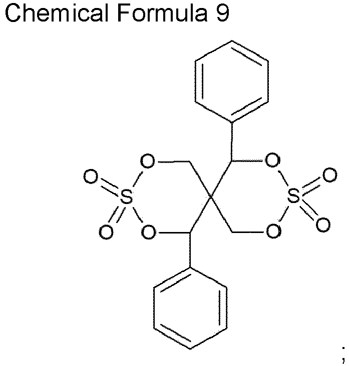 or
(ii) the additive represented by Chemical Formula 2 is a compound represented by Chemical Formula 6.

15. The method as claimed in any one of claims 12 to 14, wherein an amount of the additive represented by Chemical Formula 2 or the one or more additives represented by one or more selected from among Chemical Formulas 3 to 5 is about 0.05 wt% to about 2.1 wt% based on a total 100 wt% of the positive active material layer composition.
